# EUROPEAN PATENT APPLICATION

(11) **EP 4 711 661 A1**
(43) Date of publication of application: **18.03.2026**
(21) Application number: 25202006.0
(22) Date of filing: 12.09.2025
(51) Int. Cl.: F16M 11/04, F16H 1/00, F16M 11/16, F16M 11/18, F16M 11/42, F16M 11/08

(54) **PHOTOGRAPHIC EQUIPMENT AND ELECTRICALLY CONTROLLED SLIDING APPARATUS THEREOF**

(30) Priority: 12.09.2024 CN 202422243847 U
(71) Applicant: Zhongshan Dashan Photographic Equipment Co., Ltd., Zhongshan, Guangdong 528463 (CN)
(72) Inventor: ZHU, Xihua, Zhongshan, 528463 (CN)
(74) Representative: MERH-IP Matias Erny Reichl Hoffmann Patentanwälte PartG mbB

(57) **Abstract**

An electrically controlled sliding apparatus for photographic equipment includes a base, a sliding seat, and a wear-resistant member. The base is equipped with at least one guide rod. The sliding seat is slidably sleeved on an outer peripheral side of the guide rod. The wear-resistant member is fixedly mounted on the sliding seat; the wear-resistant member is slidably sleeved on an outer peripheral side of the guide rod , and the wear-resistant member is arranged between the guide rod and the sliding seat. Due to the wear-resistant member moving relative to the base with the sliding seat, and the wear-resistant member being spaced between the guide rod and the sliding seat, direct contact between the guide rod and the sliding seat is avoided, thereby preventing the sliding seat or guide rod from being worn.

## Description

### TECHNICAL FIELD

The present invention relates to the field of photographic equipment, and more particularly to a photographic equipment and an electrically controlled sliding apparatus thereof.

### BACKGROUND

A photographic sliding rail is an equipment for assisting a movement of a camera, an electronic control pan-tilt, or other related module, which enables the camera to shoot from different positions, meeting photographer's requirements for camera angles. The photographic sliding rail not only allows for a translation of the camera but also, in conjunction with the electronic control pan-tilt, enables the camera to rotate around two different axes simultaneously. In traditional technology, a photographic sliding rail generally includes a base and a sliding seat which slides and connects to the base. The sliding seat is used to drive the camera to move relative to the base.

However, during the use of the photographic sliding rail, the sliding base often slides repeatedly relative to the base, and there is sliding friction at the sliding contact between the sliding base and the base. Due to the possible presence of burrs or uneven areas on the contact surface of the sliding seat, when the contact surface of the sliding seat repeatedly slides in contact with the base, the base is prone to significant wear or significant noise is produced.

### SUMMARY

In view of this, the present invention provides an electrically controlled sliding apparatus for photographic equipment which can solve or at least alleviate the above-mentioned technical problems.

The present invention provides an electrically controlled sliding apparatus for photographic equipment including:
a base equipped with a guide rod;
a sliding seat slidably sleeved on an outer peripheral side of the guide rod; and
a wear-resistant member fixedly mounted on the sliding seat; the wear-resistant member being slidably fitted on an outer peripheral side of the guide rod, and the wear-resistant member being arranged between the guide rod and the sliding seat.

In the above-mentioned electrically controlled sliding apparatus for photographic equipment, due to the wear-resistant member moving relative to the base with the sliding seat, and the wear-resistant member being spaced between the guide rod and the sliding seat, direct contact between the guide rod and the sliding seat is avoided, thereby preventing the sliding seat or guide rod from being worn.

In one embodiment, two guide rods are mounted parallel to the base; the sliding seat is simultaneously limited by the two guide rods, and a center of the sliding seat is located between the two guide rods.

In one embodiment, the sliding seat is provide a through hole; the guide rod is inserted into the through hole.

In one embodiment, the wear-resistant member is mounted in the through hole; an inner diameter of the wear-resistant member is larger than an outer diameter of the guide rod.

In one embodiment, the wear-resistant member is fixedly connected to the sliding seat through flanges and screws.

In one embodiment, the wear-resistant member is a bushing; a cross-section of the wear-resistant member is in a shape of a circular ring that is closed in the circumferential direction, and a cross-section of the guide rod is circular.

In one embodiment, corresponding to each guide rod, two wear-resistant members are arranged in sequence along an axial direction on the sliding seat, and the guide rod slides through the two wear-resistant members in sequence.

In one embodiment, a hardness of the wear-resistant member is lower than that of the guide rod.

In one embodiment, comprising a shaft table used to connect to an electronic control installation platform; the sliding seat being slidably mounted on the base and being provide with conductive terminals for forming conductive contact with the electronic control installation platform.

In one embodiment, comprising a conductive slip ring comprising a rotating part and a fixed part which are rotatably connected, the rotating part being in sliding contact with and electrically connected to the fixed part; an electrical module being fixedly mounted inside the sliding seat; the fixed part being fixedly connected to the sliding seat and being electrically connected to the electrical module; the rotating part being fixedly connected to the shaft table and being electrically connected to the conductive terminals; the shaft table comprising a cover which rotates relative to the sliding seat, and an insulating member mounted on the cover; several conductive terminals being inserted at intervals into the insulating member.

In one embodiment, the insulating member is at least partially exposed on the cover; an outer end face of the conductive terminals is flush with an outer surface of the insulating member; the insulating member is provided with at least one convex strip section; the convex strip section protrudes from the outer surface of the insulating member, and is located between outer end faces of adjacent two conductive terminals .

In one embodiment, the cover is provided with two opposing limit blocks; a directional groove is formed between the two limit blocks.

In one embodiment, the cover is provided with a first end and a second end which are opposite to each other; the first end is used for the electronic control installation platform to enter the directional groove; an outer surface of the insulating member comprises a matching surface and a transition slope arranged adjacent to each other; the matching surface protrudes relative to a bottom surface of the directional groove; the conductive terminals are distributed on the matching surface; the transition slope is located near the first end of the cover relative to the matching surface; along a direction from the second end to the first end, the transition slope is inclined towards a bottom of the directional groove.

In one embodiment, further comprising a conductive slip ring comprising a rotating part and a fixed part which are rotatably connected, the rotating part being in sliding contact with and electrically connected to the fixed part; an electrical module being fixedly mounted inside the sliding seat; the fixed part being fixedly connected to the sliding seat and being electrically connected to the electrical module; the rotating part being fixedly connected to the shaft table and being electrically connected to the conductive terminals; the shaft table comprising a main shaft body and a cover; the main shaft body comprising a shaft cylinder section rotatably accommodated inside the sliding seat and a collar section connected to the shaft cylinder section; the cover being connected to the collar section; the conductive terminals being mounted on the cover.

The present invention also provides an electrically controlled sliding apparatus for photographic equipment including:
a base;
a control component mounted inside the base;
a sliding seat slidably mounted on the base, an electrical module being fixedly mounted inside the sliding seat, and the electrical module being electrically connected to the control component;
a shaft table rotatably mounted on the sliding seat and used to connect to an electronic control installation platform of a camera, the shaft table being provide with conductive terminals for forming conductive contact with the electronic control installation platform; and
a conductive slip ring comprising a rotating part and a fixed part which are rotatably connected, the rotating part being in sliding contact with and electrically connected to the fixed part, the rotating part being fixedly connected to the shaft table and being electrically connected to the conductive terminals.

In the above-mentioned electrically controlled sliding apparatus for photographic equipment, the rotating part of the conductive slip ring is fixedly connected with the shaft table and rotates together with the shaft table. The fixed part is fixedly connected to the sliding seat. The fixed part is electrically connected with the electrical module, and the rotating part is electrically connected to the conductive terminals. Specifically, the rotating part is electrically connected with the conductive terminals of the shaft table through lead wires, and then forms an electrical connection with the control component. Therefore, the control component and the electrical module are electrically connected to the electronic control installation platform through the conductive slip ring and conductive terminals, so that power supply current can be output to the electronic control installation platform through conductive terminals, avoiding the need for a separate battery for the electronic control installation platform and simplifying its structure. At the same time, the control component and the electrical module form a wired power and signal connection with the electronic control installation platform through conductive terminals, ensuring high stability in the transmission of motion coordination signals between the electrical module and the electronic control installation platform, thereby avoiding a lack of precise synchronization control between different actions due to signal delay in wireless connections (such as Bluetooth connections), and ensuring the experience of the electrically controlled sliding apparatus.

In one embodiment, the rotating part of the conductive slip ring comprises lead wires and is electrically connected to the conductive terminals through the lead wires; or/and the fixed part of the conductive slip ring comprises lead wires and is electrically connected to the electrical module through the lead wires.

In one embodiment, the shaft table comprises a cover which rotates relative to the sliding seat, and an insulating member mounted on the cover; several conductive terminals are inserted at intervals into the insulating member.

In one embodiment, the insulating member is at least partially exposed on the cover; an outer end face of the conductive terminals is flush with an outer surface of the insulating member; the insulating member is provided with at least one convex strip section; the convex strip section protrudes from the outer surface of the insulating member, and is located between outer end faces of adjacent two conductive terminals.

In one embodiment, the cover is provided with two opposing limit blocks; a directional groove is formed between the two limit blocks.

In one embodiment, the cover is provided with a first end and a second end which are opposite to each other; the first end is used for the electronic control installation platform to enter the directional groove; an outer surface of the insulating member comprises a matching surface and a transition slope arranged adjacent to each other; the matching surface protrudes relative to a bottom surface of the directional groove; the conductive terminals are distributed on the matching surface; the transition slope is located near the first end of the cover relative to the matching surface; along a direction from the second end to the first end, the transition slope is inclined towards a bottom of the directional groove.

In one embodiment, the shaft table comprises a main shaft body and a cover; the main shaft body comprises a shaft cylinder section rotatably accommodated inside the sliding seat and a collar section connected to the shaft cylinder section; the cover is connected to the collar section; the conductive terminals are mounted on the cover.

In one embodiment, the rotating part is positioned and accommodated inside the shaft cylinder section, and an outer diameter of the rotating part corresponds to an inner diameter of the shaft cylinder section, an end of the rotating part near the cover rotates synchronously with the shaft cylinder section.

In one embodiment, the collar section is provided with a receiving groove ; an opening of the receiving groove faces the cover; the receiving groove is connected to an inner cavity of the shaft cylinder section.

In one embodiment, the end of the shaft cylinder section away from the cover faces the electrical module.

The present invention further provides a photographic equipment including: a photographic apparatus; and the above electrically controlled sliding apparatus; the photographic apparatus is connected to the electrically controlled sliding apparatus directly or indirectly.

### BRIEF DESCRIPTION OF DRAWINGS

FIG. 1 is a perspective schematic view of an electrically controlled sliding apparatus for photographic equipment according to an embodiment of the present invention.
FIG. 2 is an exploded schematic view of the electrically controlled sliding apparatus shown in FIG. 1.
FIG. 3 is a perspective schematic view of a combination of the sliding seat and shaft table of the electrically controlled sliding apparatus shown in FIG. 1 with the electronic control installation platform.
FIG. 4 is a perspective schematic view of the sliding seat and shaft table separated from the electronic control installation platform shown in FIG. 3.
FIG. 5 is a perspective schematic view of the sliding seat and the shaft table of the electrically controlled sliding apparatus shown in FIG. 2.
FIG. 6 is a perspective sectional view of the sliding seat and the shaft table shown in FIG. 5.
FIG. 7 is an exploded schematic view of the sliding seat and the shaft table shown in FIG. 5.
FIG. 8 is a perspective schematic view of a conductive slip ring in FIG. 7.
FIG. 9 is a perspective sectional view of the sliding seat and the shaft table shown in FIG. 5 from another angle.
FIG. 10 is a partial schematic view of a base in the electrically controlled sliding apparatus shown in FIG. 2.
FIG. 11 is a partial perspective schematic view of the base shown in FIG. 10.
FIG. 12 is a partial perspective schematic view of the base shown in FIG. 11.

Reference signs: 100, electrically controlled sliding apparatus; 20, base; 21, control component; 22, guide rod; 23, support strip; 24, elastic spiral conductor; 25, displacement driving member; 26, transmission component; 261, driving wheel; 262, driven wheel; 263, synchronous belt; 27, first worm; 28, transmission shaft; 281, first radial bearing member; 29, first worm wheel; 30, sliding seat; 31, electrical module; 32, clamp block; 33, rotating driving member; 331, second worm; 34, second radial bearing member; 35, axial bearing member; 36, wear-resistant member; 37, through hole; 38, bracket; 381, slot; 40, shaft table; 41, conductive terminal; 42, cover; 421, groove; 422, limit block; 423, directional groove; 424, first end; 425, second end; 426, sliding pin; 43, main shaft body; 431, shaft cylinder section; 432, collar section; 433, receiving groove; 435, second worm wheel; 44, circuit board; 441, interface socket; 45, threaded member; 46, insulating member; 461, convex strip section; 462, matching surface; 463, transitional slope; 50, conductive slip ring; 51, fixed part; 52, rotating part; 53, lead wire; 900, electronic control installation platform; 901, contact terminal.

### DESCRIPTION OF EMBODIMENTS

The following will provide a clear and complete description of the technical solution of the present invention in conjunction with the accompanying drawings. Obviously, the described embodiments are a part of the embodiments of the present invention, not all of them. Based on the embodiments in the present invention, all other embodiments obtained by ordinary skilled persons in the art without creative labor are within the scope of protection of the present invention.

In the description of the present invention, it should be noted that the terms "center", "up", "down", "left", "right", "vertical", "horizontal", "inside", "outside" and other directional or positional relationships indicated are based on the directional or positional relationships shown in the accompanying drawings, only for the convenience of describing and simplifying the description, and do not indicate or imply that the device or component referred to must have a specific orientation, be constructed and operated in a specific orientation, and therefore cannot be understood as a limitation of the present invention. In addition, the terms "first", "second", and "third" are only used for descriptive purposes and cannot be understood as indicating or implying relative importance.

In the description of the present invention, it should be noted that unless otherwise specified and limited, the terms "installation", "connection", and "interconnection" should be broadly understood. For example, they can be fixed connections, detachable connections, integrated connections, mechanical connections, electrical connections, direct connections, indirect connections through intermediate media, or internal connections between two components. For ordinary skilled persons in the art, the specific meanings of the above terms in the present invention can be understood in specific situations.

Below, the technical solution provided by the embodiments of the present invention will be introduced in conjunction with the accompanying drawings.

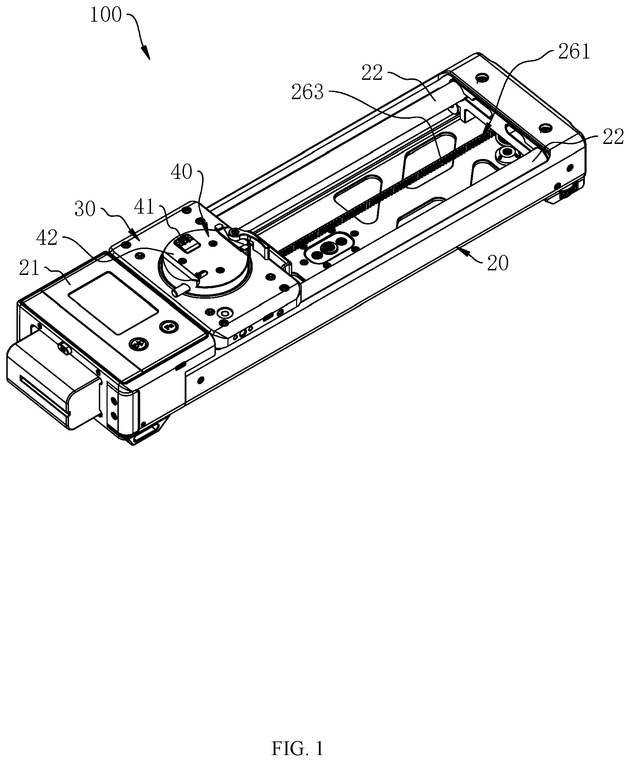

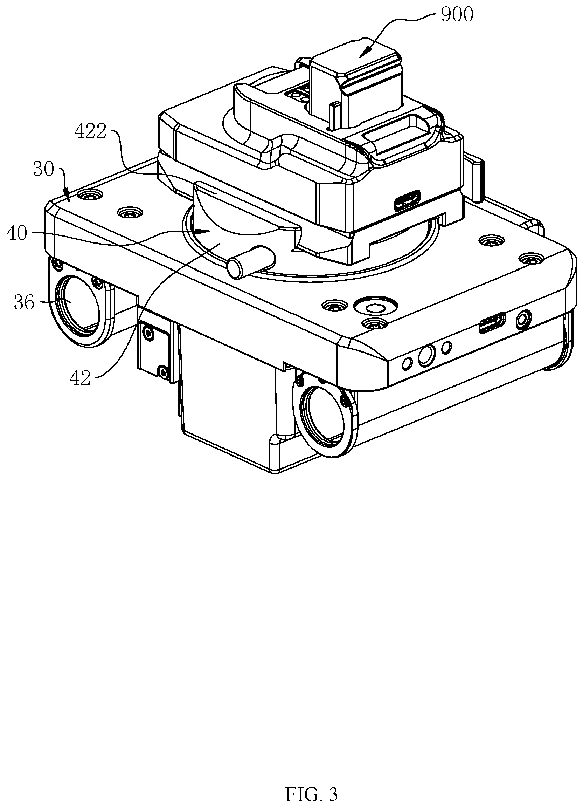

FIGs. 1 to 12 show an electrically controlled sliding apparatus 100 for photographic equipment according to at least one embodiment of the present invention. As shown in FIG. 1, the present invention provides an electrically controlled sliding apparatus 100 for installing and connecting an electronic control installation platform 900. The electrically controlled sliding apparatus 100 can drive the electronic control installation platform 900 to move along a straight path and rotate around a first axis.

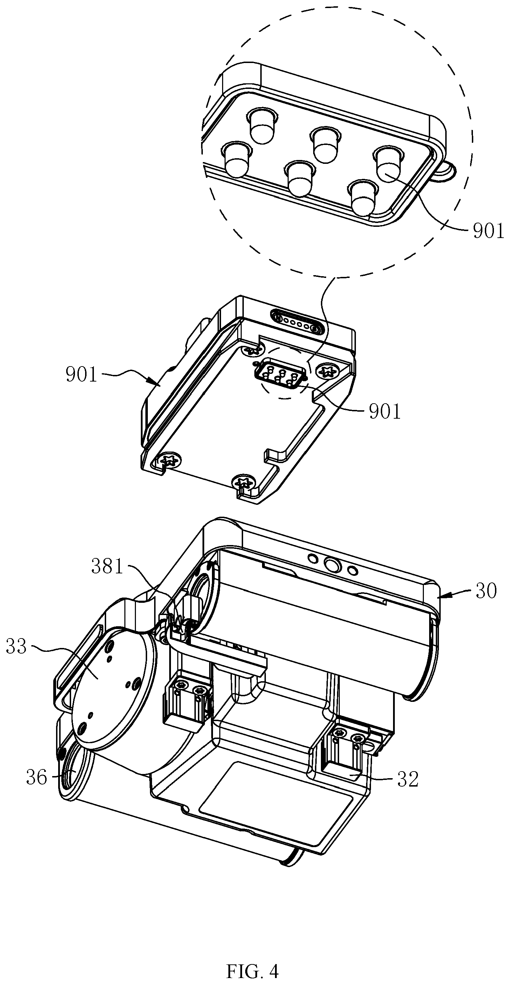

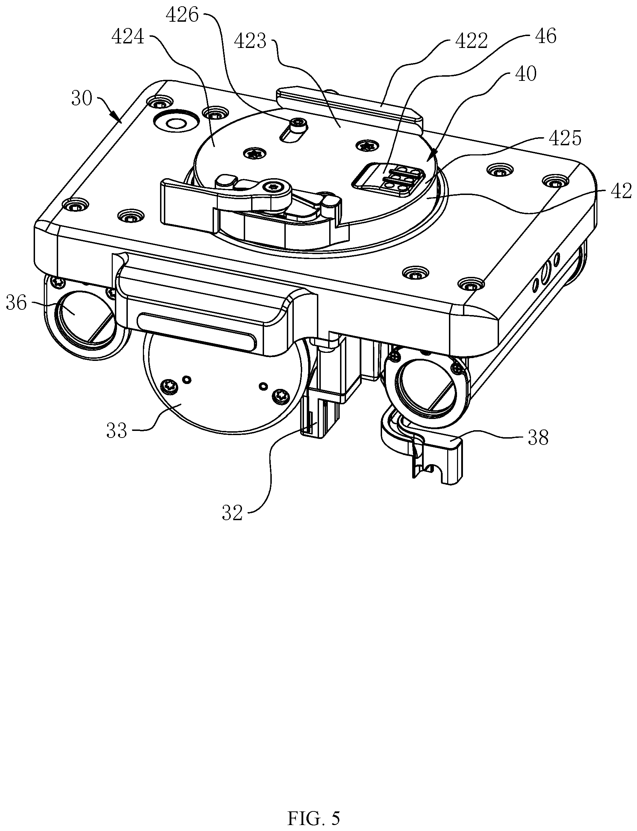

Referring to FIGs. 4 and 5, the electronic control installation platform 900 is used for installing or connecting a camera and includes an electric control device. The electronic control installation platform 900 can be a camera electric control pan-tilt, used to drive the camera to rotate around one or more axes different from the first axis. The electronic control installation platform 900 can also be a stabilizer used to eliminate camera shake.

It can be understood that the electrically controlled sliding apparatus 100 is also used to install a quick mounting plate, which is used to directly fix a camera or other photographic equipment.

Specifically, as shown in FIGs. 5 to 7, the electrically controlled sliding apparatus 100 includes a base 20, a control component 21, a sliding seat 30, a shaft table 40, and a conductive slip ring 50. The control component 21 is mounted inside the base 20. The sliding seat 30 is mounted on the base 20 in a sliding manner, and an electrical module 31 is fixedly mounted inside the sliding seat 30. The electrical module 31 is electrically connected to the control component 21. The shaft table 40 is rotatably mounted on the sliding seat 30, and is used to connect to the electronic control installation platform 900 of the camera. The shaft table 40 is provided with conductive terminals 41 for forming conductive contact with the electronic control installation platform 900. The conductive slip ring 50 forms electrical connections with the electrical module 31 and the conductive terminals 41 of the shaft table 40, respectively.

Specifically, the electronic control installation platform 900 has contact terminals 901 for electrical connection with the conductive terminals 41. After the electronic control installation platform 900 is mounted on the shaft table 40 of the electrically controlled sliding apparatus 100 of the present invention, the contact terminals 901 of the electronic control installation platform 900 and the electrical module 31 form a conductive contact through the conductive terminals 41 of the shaft table 40 and the conductive slip ring 50, thereby achieving electrical connection.

The conductive slip ring 50 includes a rotating part 52 and a fixed part 51. The rotating part 52 can rotate relative to the fixed part 51, and the rotating part 52 is in sliding contact with and electrically connected to the fixed part 51, thereby forming a stable electrical connection during rotation.

In this embodiment, the rotating part 52 of the conductive slip ring 50 is fixedly connected to the shaft table 40 and rotates together with the shaft table 40. The fixed part 51 is fixedly connected to the sliding seat 30. The fixed part 51 is electrically connected to the electrical module 31, and the rotating part 52 is electrically connected to the conductive terminals 41. Specifically, the rotating part 52 is electrically connected to the conductive terminals 41 of the shaft table 40 through the lead wire 53, and then forms an electrical connection with the control component 21. Therefore, the control component 21 and the electrical module 31 are electrically connected to the electronic control installation platform 900 through the conductive slip ring 50 and the conductive terminal 41, so that the power supply current can be output to the electronic control installation platform 900 through the conductive terminals 41, avoiding the need for a separate battery for the electronic control installation platform 900 and simplifying its structure. At the same time, the control component 21 and the electrical module 31 form a wired power and signal connection with the electronic control installation platform 900 through the conductive terminals 41, ensuring high stability in the transmission of motion coordination signals between the electrical module 31 and the electronic control installation platform 900, thereby avoiding a lack of precise synchronization control between different actions due to signal delay in wireless connections (such as Bluetooth connections), and ensuring the experience of the electrically controlled sliding apparatus 100.

Specifically, the motion coordination signals can be transmitted from the electrical module 31 to the electrical control installation platform 900, or from the electrical control installation platform 900 to the electrical module 31. The motion coordination signals are used to maintain a certain synchronization relationship between the translations and rotations of the shaft table 40 and the motion modes controlled by the electronic control installation platform 900.

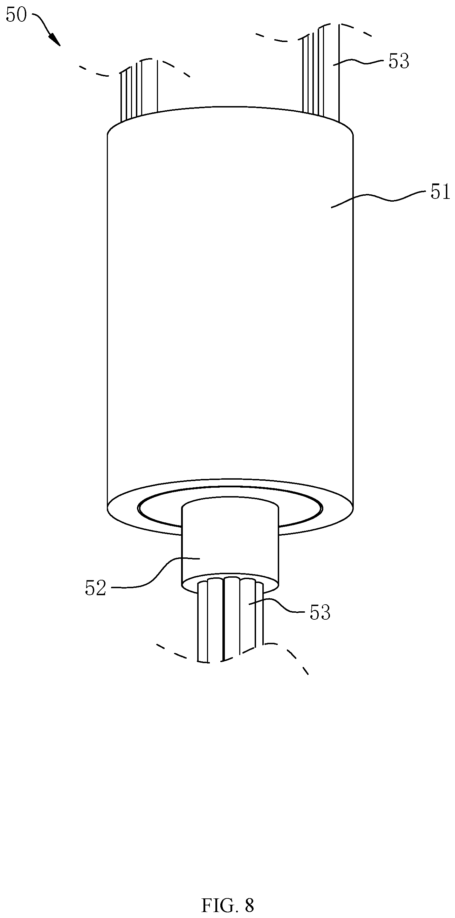

In some embodiments, a structural form of at least one interface end of the conductive slip ring 50 is a lead wire. Specifically, the conductive slip ring 50 is electrically connected to the conductive terminals 41 or the electrical module 31 through lead wires 53. In some embodiments, as shown in FIG. 8, the rotating part 52 of the conductive slip ring 50 includes lead wires 53, and is electrically connected to the conductive terminals 41 through the lead wires 53. In some embodiments, the fixed part 51 of the conductive slip ring 50 includes lead wires 53, and is electrically connected to the electrical module 31 through the lead wires 53.

Specifically, the control component 21 can be connected to an external power source to provide power supply current to the electrical module 31 and the electronic control installation platform 900, ensuring normal operations of the electrical module 31 and the electronic control installation platform 900. The control component 21 can also include built-in batteries, especially rechargeable batteries, to meet the needs of camera power supply while achieving portability.

In some embodiments, the control component 21 can also be used to control linear movements of the sliding seat 30 relative to the base 20. In some embodiments, the control component 21 may also send motion coordination signals to the electrical module 31 and the electronic control installation platform 900. The electrical module 31 and the electronic control installation platform 900 can provide feedback on execution result signals to the control component 21.

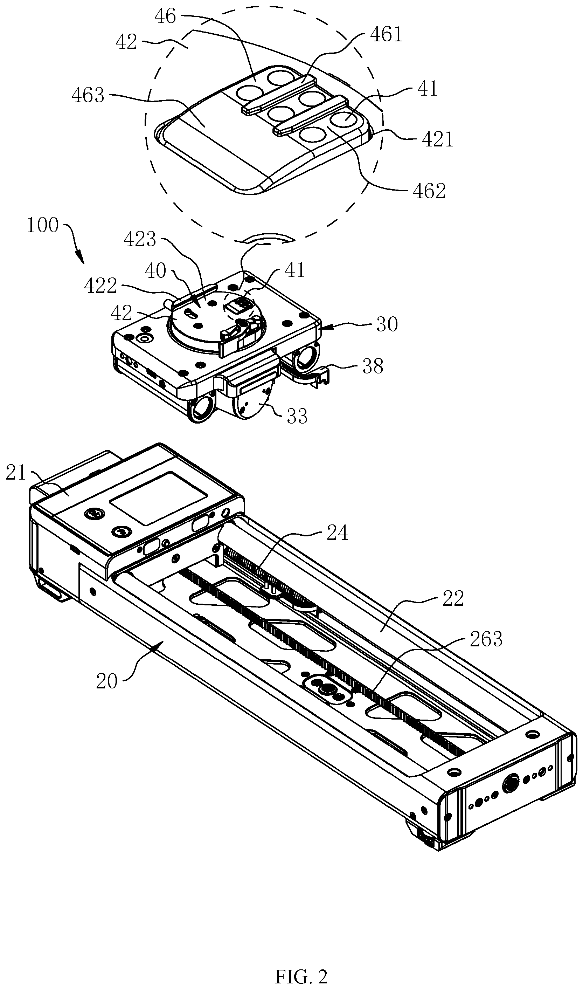

In some embodiments, combining FIGs. 1 and 2, the base 20 is equipped with a guide rod 22. The sliding seat 30 is slidably fitted on an outer peripheral side of the guide rod 22, so that the guide rod 22 guides the sliding direction of the sliding seat 30 relative to the base 20. In some embodiments, two guide rods 22 are mounted parallel to the base 20. Furthermore, the sliding seat 30 is simultaneously limited by two guide rods 22, with a center of the sliding seat 30 located between the two guide rods 22.

Combining FIGs. 5 to 7, the shaft table 40 includes a cover 42 which rotates relative to the sliding seat 30, and an insulating member 46 mounted on the cover 42. Several conductive terminals 41 are inserted at intervals into the insulating member 46. Specifically, several conductive terminals 41 are fixedly inserted into the insulating member 46 at intervals, so as to maintain stable positions between each conductive terminal 41. Due to the insulating properties of the insulating member 46, it prevents short circuiting of the conductive terminals 41. At the same time, the insulating member 46 and the several conductive terminals 41 can form a pre-assembled component. When the insulating member 46 is mounted on the cover 42, several conductive terminals 41 are simultaneously mounted on the cover 42, which is conducive to improving the installation efficiency of the conductive terminals 41.

In other embodiments, when the cover 42 is made of insulating material, the conductive terminals 41 can also be directly mounted on the cover 42.

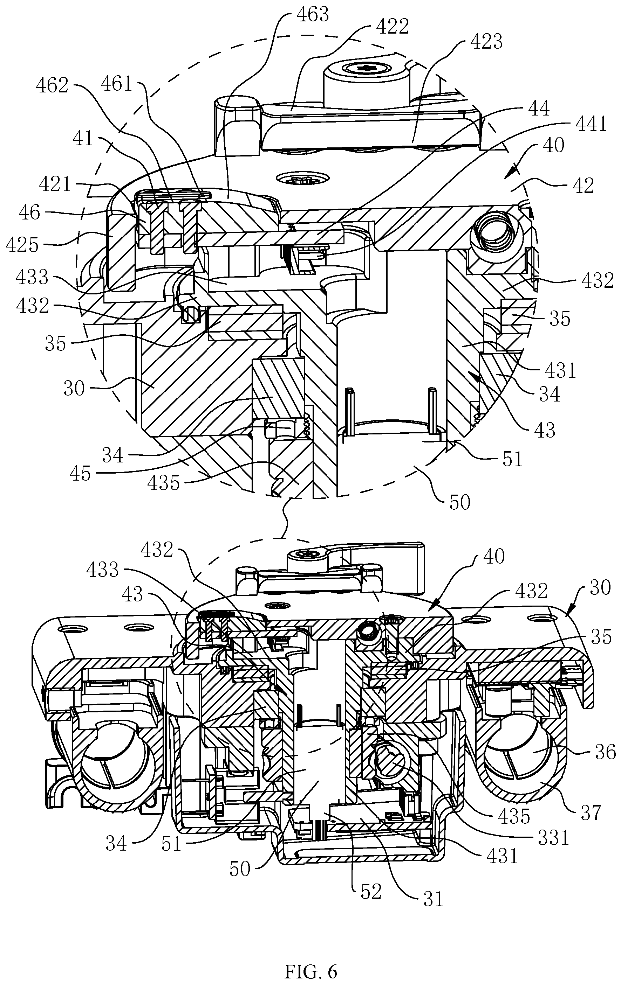

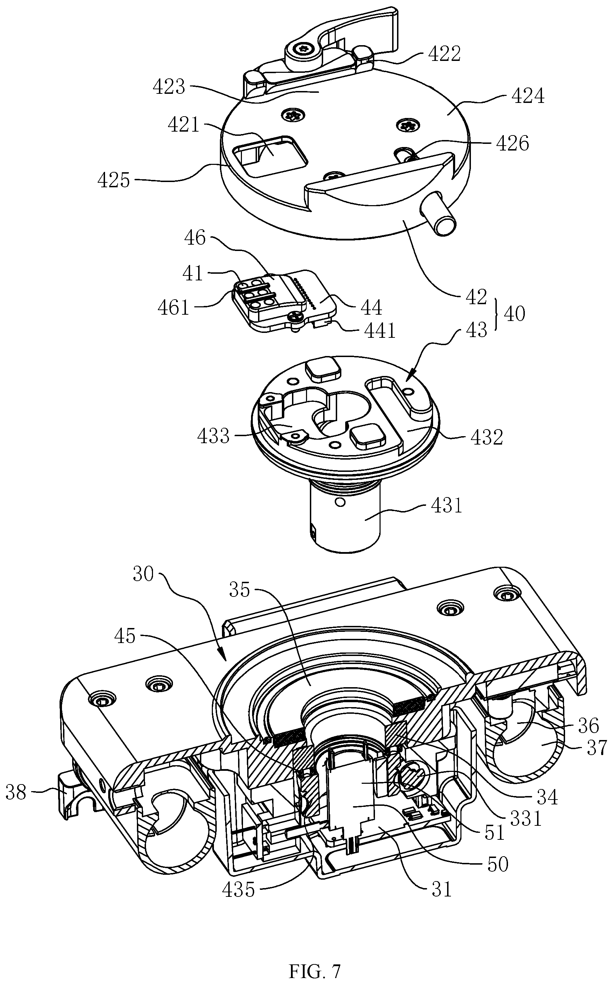

In some embodiments, combining FIGs. 6 and 7, the cover 42 is formed with a groove 421, and the insulating member 46 is mounted in the groove 421, so that an outer surface of the insulating member 46 coincides with or is spaced a small distance away from a portion of a surface of the cover 42. Meanwhile, the conductive terminal 41 can extend to the inside of the cover 42 through the groove 421.

In some embodiments, the insulating member 46 is at least partially exposed on the cover 42, so that after the electronic control installation platform 900 is mounted on the shaft table 40, the outer surface of the insulating member 46 can be opposite to a distribution area of the contact terminals 901 of the electronic control installation platform 900.

In some embodiments, combining FIG. 2, an outer end face of the conductive terminal 41 is flush with an outer surface of the insulating member 46, thereby keeping the outer surface of the insulating member 46 flat. The contact terminal 901 of the electronic control installation platform 900 adopts an elastic pin structure, which avoids the conductive terminal 41 from causing sliding resistance to the contact terminal 901 of the electronic control installation platform 900.

In some embodiments, combining FIG. 2, the insulating member 46 is provided with at least one convex strip section 461. The convex strip section 461 protrudes from the outer surface of the insulating member 46, and is located between the outer end faces of adjacent two conductive terminals 41. Specifically, the convex strip section 461 can maintain a gap between other external metal members and the outer surface of the insulating member 46, avoiding conductive contact between the external metal members and the outer end faces of the two conductive terminals 41 at the same time, and preventing short circuits between the two conductive terminals 41 with potential differences. Specifically, based on the intended use of the conductive terminals 41, it can be determined whether there will be a potential difference between the conductive terminals 41. When laying out the conductive terminals 41, two conductive terminals 41 with potential differences can be placed on both sides of the convex strip section 461.

In some embodiments, combining FIG. 5, the cover 42 is provided with two opposing limit blocks 422. A directional groove 423 is formed between two limit blocks 422. Specifically, the electronic control installation platform 900 is partially accommodated in the directional groove 423. Under the limitation of the limit block 422, the electronic control installation platform 900 is slidably set in the directional groove 423. Specifically, the directional groove 423 is shaped similar to a dovetail groove. A structure similar to a dovetail block is formed on the electronic control installation platform 900 to cooperate with the directional groove 423. Specifically, an extension direction of the convex strip section 461 corresponds to the sliding direction of the electronic control installation platform 900 within the directional groove 423.

In some embodiments, combining FIGs. 5 and 6, the cover 42 is provided with a first end 424 and a second end 425 which are opposite to each other. The first end 424 is used for the electronic control installation platform 900 to enter the directional groove 423. The outer surface of the insulating member 46 includes a matching surface 462 and a transition slope 463 arranged adjacent to each other, with the matching surface 462 protruding relative to a bottom surface of the directional groove 423. The conductive terminals 41 are distributed on the matching surface 462. The transition slope 463 is located near the first end 424 of the cover 42 relative to the matching surface 462. Along a direction from the second end 425 to the first end 424, the transition slope 463 is inclined towards the bottom of the directional groove 423. Specifically, in the case where the contact terminal 901 of the electronic control installation platform 900 adopts an elastic pin structure, when the electronic control installation platform 900 slides into the directional groove 423 from the first end 424, the electronic control installation platform 900 slides in the direction from the first end 424 to the second end 425, and the contact terminal 901 first contacts the transition slope 463. The transition slope 463 gradually compresses the contact terminal 901, preventing the end of the contact terminal 901 from being blocked during sliding. Due to the protrusion of the matching surface 462 relative to the bottom surface of the directional groove 423, and the fact that the outer end surface of the conductive terminal 41 is flush with the matching surface 462, when the contact terminal 901 comes into contact with the conductive terminal 41, the contact terminal 901 of the electronic control installation platform 900 remains in a compressed state, thereby keeping the contact terminal 901 in close contact with the conductive terminal 41 and improving the stability of electrical contact.

In some embodiments, a distance between the insulating member 46 and the second end 425 is smaller than a distance between the insulating member 46 and the first end 424.

In some embodiments, combining FIGs. 5 and 7, the cover 42 is connected with a positioning component, which is used to restrict the electronic control installation platform 900 from exiting from the directional groove 423, thereby limiting the electronic control installation platform 900 to the shaft table 40. At this fixed position, several contact terminals 901 of the electronic control installation platform 900 accurately correspond to several conductive terminals 41 on the cover 42. In some embodiments, the positioning component includes a sliding pin 426. When in a reset position, the sliding pin 426 can stop the electronic control installation platform 900 from sliding towards the first end of the cover 42. When in a unlocked position, the restriction of the sliding pin 426 on the electronic control installation platform 900 is lifted.

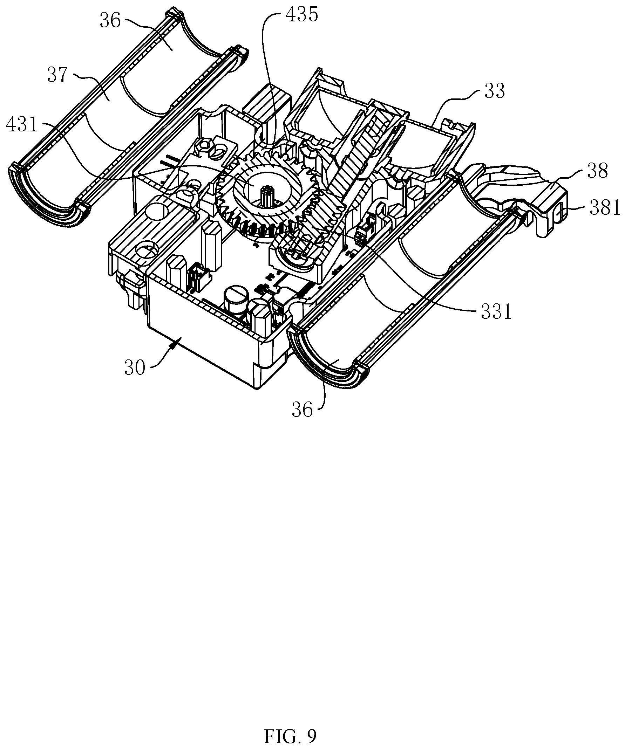

In some embodiments, combining FIGs. 4 and 9, the sliding seat 30 is equipped with a rotating driving member 33. The rotating driving member 33 is used to drive the shaft table 40 to rotate in a circumferential direction. Specifically, under the control of the electrical module 31, the rotating driving member 33 drives the shaft table 40 to rotate in the circumferential direction. The electrical module 31 can specifically be a circuit that can control the rotation of the rotating driving member 33 and form electrical cooperation with the control component 21.

In some embodiments, combining FIGs. 6 and 7, the shaft table 40 also includes a main shaft body 43. The main shaft body 43 includes a shaft cylinder section 431 rotatably accommodated inside the sliding seat 30 and a collar section 432 connected to the shaft cylinder section 431. The cover 42 is connected to the collar section 432. Specifically, the shaft cylinder section 431 forms a rotational fit with the sliding seat 30, and the rotating driving member 33 transmits driving force to the shaft cylinder section 431, causing the shaft table 40 to rotate relative to the sliding seat 30. The outer diameter of the collar section 432 is greater than the outer diameter of the shaft cylinder section 431. Specifically, the shaft cylinder section 431 is arranged in a hollow shape.

Combining FIGs. 6 and 7, in some embodiments, the sliding seat 30 is also equipped with a first radial bearing member 281, which is provided on the outer peripheral side of the shaft cylinder section 431 and on the inner peripheral side of the sliding seat 30. Specifically, due to the first radial bearing member 281 provided on the outer peripheral side of the shaft cylinder section 431 and the sliding seat 30, direct friction between the shaft cylinder section 431 and the sliding seat 30 is avoided, ensuring smooth rotation of the main shaft body 43 and improving the service life of the main shaft body 43 and the sliding seat 30. In some embodiments, the first radial bearing member 281 is a deep groove ball bearing.

In some embodiments, combining FIGs. 6 and 7, the sliding seat 30 further includes an axial bearing member 35, which is disposed on the outer peripheral side of the shaft cylinder section 431 and between the lower side of the collar section 432 and the sliding seat 30. Specifically, the gravity of the electronic control installation platform 900 is applied to the collar section 432, which is located on an upper side of the sliding seat 30. Due to the axial bearing member 35 being located between the lower side of the collar section 432 and the sliding seat 30, direct friction between the collar section 432 and the upper surface of the sliding seat 30 is avoided, ensuring smooth rotation of the main shaft body 43 and improving the service life of the main shaft body 43 and the sliding seat 30. In some embodiments, the axial bearing memeber 35 is a thrust bearing.

In some embodiments, combining FIGs. 6 and 8, the rotating part 52 is fixedly arranged inside the shaft cylinder section 431, and the outer diameter of the rotating part 52 corresponds to the inner diameter of the shaft cylinder section 431. Specifically, by accommodating the rotating part 52 within the shaft cylinder section 431, it is possible to avoid the conductive slip ring 50 occupying other spaces within the sliding seat 30. Due to the outer diameter of the rotating part 52 corresponding to the inner diameter of the shaft cylinder section 431, a change in an axial position of the conductive slip ring 50 can be reduced during the rotation of the main shaft body 43 relative to the sliding seat 30.

In some embodiments, combining FIGs. 6 and 7, the electrically controlled sliding apparatus 100 further includes a circuit board 44. The conductive terminal 41 is fixedly connected to the circuit board 44. A side of the circuit board 44 facing away from the cover 42 is fixed with an interface socket 441. The conductive terminal 41 is electrically connected to the interface socket 441 through the circuit board 44. A cable connected to an interface end of the conductive slip ring 50 is connected to the interface socket 441 through a plug, thereby forming an electrical connection between the interface end of the conductive slip ring 50 and the conductive terminal 41.

In some embodiments, combining FIGs. 6 and 7, the collar section 432 is provided with a receiving groove 433. An opening of the receiving groove 433 faces the cover 42, and the receiving groove 433 is connected to an inner cavity of the shaft cylinder section 431, so that the receiving groove 433 can accommodate the interface socket 441 connected to the circuit board 44 and the plug at the end of the cable. Due to the fact that the receiving groove 433 is connected to the inner cavity of the shaft cylinder section 431, it avoids the need for the cable to pass through narrow positions, which is beneficial for improving the assembly efficiency of the electrically controlled sliding apparatus 100. Specifically, the circuit board 44 is fixed to the collar section 432 by fasteners. Specifically, the conductive terminal 41 is fixed to the circuit board 44 by welding.

In some embodiments, combining FIGs. 8 and 9, the electrically controlled sliding apparatus 100 further includes a wear-resistant member 36. The wear-resistant member 36 is fixedly mounted on the sliding seat 30, and the wear-resistant member 36 is slidably fitted on the outer peripheral side of the guide rod 22. Specifically, the wear-resistant member 36 moves relative to the base 20 with the sliding seat 30 and is spaced between the guide rod 22 and the sliding seat 30, avoiding direct contact between the guide rod 22 and the sliding seat 30, thereby preventing the sliding seat 30 or the guide rod 22 from being worn. In some embodiments, the wear-resistant member 36 is a bushing. Furthermore, the hardness of the wear-resistant member 36 is lower than that of the guide rod 22, effectively reducing the wear of the guide rod 22.

In some embodiments, the sliding seat 30 is provided with a through hole 37. The guide rod 22 is inserted into the through hole 37. The inner diameter of through hole 37 is slightly larger than the outer diameter of the guide rod 22. In some embodiments, the wear-resistant member 36 is fixed within the through-hole 37 through interference fit. The inner diameter of the wear-resistant member 36 is larger than the outer diameter of the guide rod 22, and the guide rod 22 is slidably inserted into the wear-resistant member 36. In other embodiments, the wear-resistant member 36 can also be fixedly connected to the sliding seat 30 through flanges and screws.

In some embodiments, combining FIGs. 6 and 9, an output shaft of the rotating driving member 33 is connected to a second worm 331. A transmission fit is formed between the rotating driving member 33 and the second worm 331, which can drive the second worm 331 to rotate along its own axis.

In some embodiments, combining FIGs. 7 and 9, the outer circumference of the shaft cylinder section 431 is fixedly connected to a second worm wheel 435, and the second worm 331 meshes with the second worm wheel 435. Specifically, in the case where the second worm 331 meshes with the second worm wheel 435, under the transmission effect of the worm and worm wheel form, the second worm wheel 435 can drive the main shaft body 43 to rotate relative to the sliding seat 30 because the second worm wheel 435 is fixedly connected to the shaft cylinder section 431. Due to the installation of the electronic control installation platform 900 on the cover 42 of the main shaft body 43, an angle of the electronic control installation platform 900 relative to the sliding seat 30 can be adjusted by rotating the output shaft of the rotating driving member 33. Therefore, after the position of the sliding seat 30 changes along a straight line direction, the angle adjustment of the main shaft body 43 by the rotating driving member 33 can keep a center of a shooting range of the electronic control installation platform 900 aligned with a shooting target, ensuring a shooting effect. Furthermore, under the transmission effect of the worm and worm wheel, the rotational speed of the shaft table 40 can be much lower than the rotational speed of the output shaft of the rotating driving member 33, which is conducive to accurately adjusting the angle of the electronic control installation platform 900.

In other embodiments, the outer circumference of the main shaft body 43 is formed with a second worm wheel, and the second worm 331 meshes with the second worm wheel. Specifically, when the second worm 331 meshes with the second worm wheel formed on the outer circumference of the main shaft body 43, the second worm 331 directly drives the main shaft body 43 to rotate relative to the sliding seat 30. In some embodiments, the shaft cylinder section 431 is formed with several worm gear teeth protruding outward on the outer peripheral side, and the worm gear teeth mesh and cooperate with the second worm 331. In other embodiments, grooves are provided on the outer side of the shaft cylinder section 431, and several grooves are distributed along the outer circumference of the shaft cylinder section 431. The shaft cylinder section 431 meshes and cooperates with the second worm 331 at the position between adjacent grooves.

In some embodiments, combining FIGs. 6 and 7, the shaft table 40 is connected with a threaded member 45, which is threaded onto the outer peripheral side of the shaft cylinder section 431, and the second worm wheel 435 is threaded onto the outer peripheral side of the shaft cylinder section 431. Specifically, the threaded member 45 and the second worm wheel 435 are respectively threaded onto the outer peripheral side of the shaft cylinder section 431. By using the threaded member 45 to press against the second worm wheel 435 along an axial direction of the shaft cylinder section 431, the second worm wheel 435 can be held in a fixed position and angle relative to the shaft table 40, so that the second worm wheel 435 can drive the shaft table 40 to rotate.

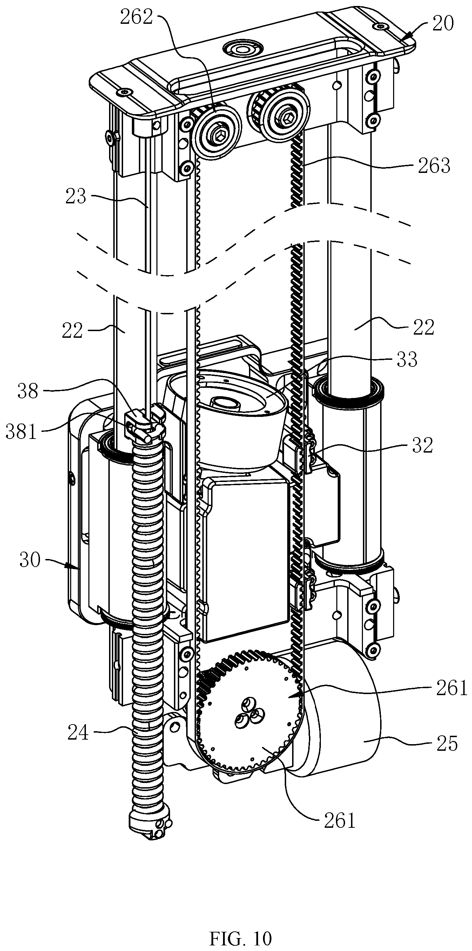

In some embodiments, combining FIGs. 9 and 10, the sliding seat 30 is connected with a bracket 38. One end of bracket 38 is equipped with a slot 381, which surrounds the outer peripheral side of a support strip 23. An elastic spiral conductor 24 is partially embedded in the slot 381. Specifically, by partially embedding the elastic spiral conductor 24 into the slot 381, the bracket 38 plays a limiting role on the elastic spiral conductor 24. When the sliding seat 30 moves relative to the base 20, it can cause the elastic spiral conductor 24 to expand and contract between the bracket 38 and the base 20, and prevent the end of the elastic spiral conductor 24 from electrically loosening relative to the sliding seat 30. More specifically, the bracket 38 is connected to sliding seat 30. In one embodiment, one end of the elastic spiral conductor 24 is embedded in the slot 381, and the other end is fixed to the base 20.

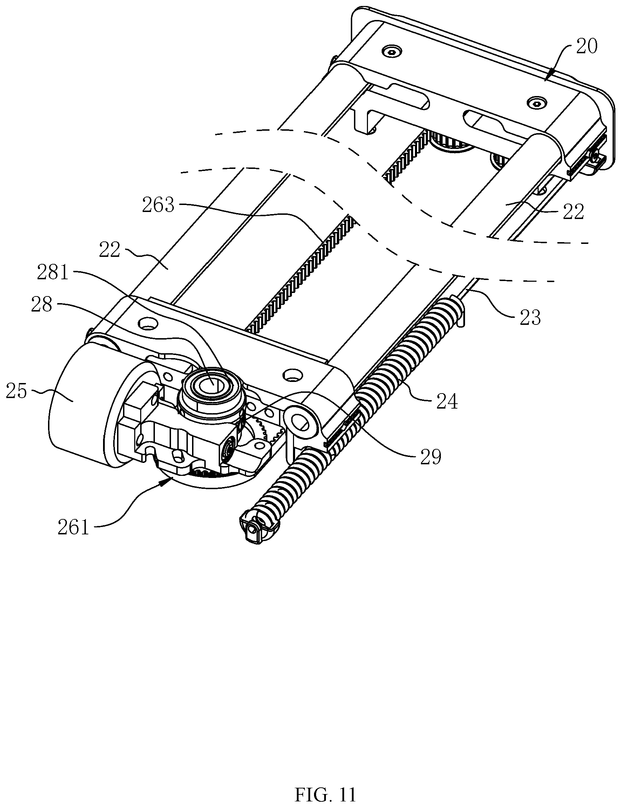

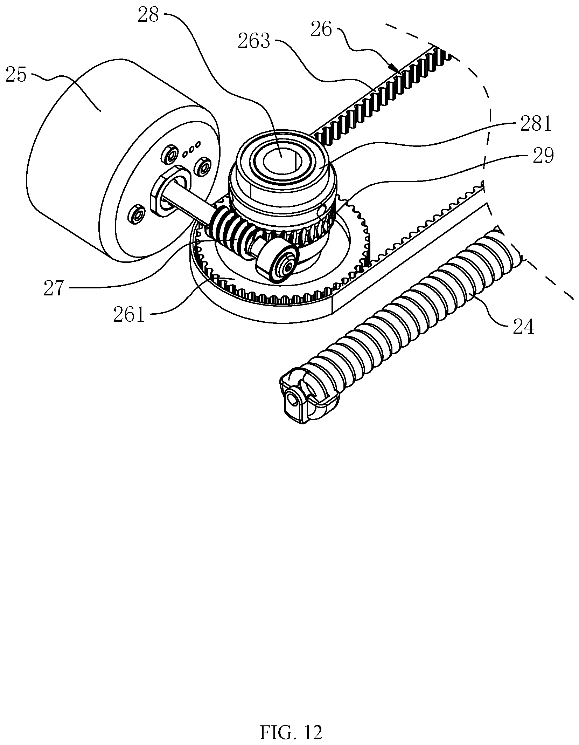

In some embodiments, combining FIGs. 11 and 12, the base 20 is equipped with a support strip 23 and an elastic spiral conductor 24. The extension direction of the support strip 23 corresponds to the sliding direction of sliding seat 30. The elastic spiral conductor 24 is wrapped around the outer peripheral side of the support strip 23. The elastic spiral conductor 24 is electrically connected between the control component 21 and the electrical module 31. Specifically, the elastic spiral conductor 24 is stretchable. When the position of the sliding seat 30 relative to the base 20 changes, the sliding seat 30 stretches the elastic spiral conductor 24, so that the length of the elastic spiral conductor 24 can adapt to the position change of the sliding seat 30 and change accordingly, so that the control component 21 and the electrical module 31 are always electrically connected when the sliding seat 30 is in different positions. The extension direction of support strip 23 is parallel or approximately parallel to the sliding direction of sliding seat 30. The support strip 23 plays a supporting role for the elastic spiral conductor 24, avoiding a sagging of the elastic spiral conductor 24.

In one embodiment, the elastic spiral conductor 24 may include a stretchable spring and a flexible conductor, with the flexible conductor spiral attached to the stretchable spring, and the flexible conductor and the stretchable spring surrounded by a same insulating sleeve. In another embodiment, the elastic spiral conductor 24 may include an elastic conductor surrounded by an insulating sleeve. Specifically, the elastic conductor has a memory form, and after a tension applied to the elastic conductor is eliminated, the elastic conductor can contract to the memory form. Specifically, the elastic conductor can be an elastic spiral metal wire.

In some embodiments, the support strip 23 is a nylon rope in a stretched state. Furthermore, the two ends of the support strip 23 are respectively fixed to the base 20. In other embodiments, the support strip 23 may also be a metal rod.

In some embodiments, combining FIGs. 10 to 12, the electrically controlled sliding apparatus 100 further includes a displacement driving member 25 and a transmission component 26 mounted on the base 20. Specifically, the displacement driving member 25 drives the sliding seat 30 to linearly slide relative to the base 20 through the transmission assembly 26. Under the control of control component 21, the displacement driving member 25 drives the sliding seat 30 to slide linearly. The control component 21 can specifically be a circuit or module that can control the displacement driving member 25 and form electrical coordination with the electrical module 31. In some embodiments, the control component 21 includes a display screen to show status information.

In some embodiments, combining FIGs. 11 and 12, the base 20 is connected with a first worm 27 and a transmission shaft 28. The first worm 27 is rotatably mounted on the base 20. The transmission shaft 28 is rotatably mounted on the base 20. In some embodiments, the outer periphery of the transmission shaft 28 is fixedly connected with a first worm wheel 29, and the first worm 27 meshes with the first worm wheel 29. In other embodiments, the outer periphery of the transmission shaft 28 is formed with a first worm wheel structure, and the first worm 27 meshes with the first worm wheel structure. The output shaft of the displacement driving member 25 is connected to the first worm 27. The transmission component 26 is connected between the transmission shaft 28 and the sliding seat 30. The transmission shaft 28 forms a transmission fit with the sliding seat 30 through the transmission component 26. When the transmission shaft 28 rotates, it can cause the sliding seat 30 to slide relative to the base 20. Specifically, when the sliding seat 30 moves relative to the base 20, the sliding seat 30 can drive the electronic control installation platform 900 to move in a straight line.

Specifically, the sliding seat 30 is guided to slide relative to the base 20 within a straight range. The output shaft of the displacement driving component member 25 can drive the first worm 27 to rotate, causing the first worm 27 to rotate around its own axis. When the first worm 27 meshes with the first worm wheel 29, the first worm wheel 29 can drive the transmission shaft 28 to rotate relative to the base 20. Due to the transmission coupling between the transmission shaft 28 and the sliding seat 30 through the transmission component 26, when the transmission shaft 28 rotates, it can cause the sliding seat 30 to slide relative to the base 20, thus enabling the displacement driving member 25 to adjust the position of the sliding seat 30. Under the transmission effect of the worm and worm wheel, the rotational speed of the transmission shaft 28 is much lower than that of the first worm 27, thus enabling precise control of the movement speed and position of the sliding seat 30, which is beneficial for improving the accuracy of the position control of the electronic control installation platform 900. In some embodiments, the transmission shaft 28 is formed with several worm gear teeth protruding outward on the outer peripheral side, and the worm gear teeth mesh and cooperate with the first worm 27.

In some embodiments, combining FIGs. 10 to 12, the transmission component 26 includes a driving wheel 261, a driven wheel 262, and a synchronous belt 263. The driving wheel 261 and the driven wheel 262 are respectively rotatably mounted on the base 20. The transmission shaft 28 forms a transmission fit with the driving wheel 261. The synchronous belt 263 is hung on the outer peripheral sides of the driving wheel 261 and the driven wheel 262. The sliding seat 30 is connected to the synchronous belt 263. Specifically, the sliding seat 30 is connected to a small section of the synchronous belt 263. When the driving wheel 261 rotates and a small section of the synchronous belt 263 moves in a straight line, the sliding seat 30 moves in a straight line under the traction of the synchronous belt 263. In some embodiments, the sliding seat 30 is connected with a clamp block 32, which is fixedly arranged with the synchronous belt 263, so that the synchronous belt 263 can drive the sliding seat 30 to move. More specifically, there are one or more driven wheel 262. In other embodiments, the transmission component 26 includes a screw, which is threaded with the sliding seat 30. The transmission shaft 28 can drive the screw to rotate. When the screw rotates, it drives the sliding seat 30 to move in a straight line.

Furthermore, combining FIG. 12, the base 20 is equipped with a second radial bearing member 34. One end of the transmission shaft 28 is inserted into the second radial bearing member 34. The other end of the transmission shaft 28 is connected to the driving wheel 261.

In some implementations, the displacement driving member 25 is a stepper motor or a servo motor. In some implementations, the rotating driving member 33 is a stepper motor or a servo motor.

The above embodiments are only a description of the preferred embodiments of the present invention and do not limit the scope of the present invention. Without departing from the design spirit of the present invention, various modifications and improvements made by ordinary skilled persons in the art to the technical solution of the present invention should fall within the scope of protection determined by the claims of the present invention.

## Claims

1. An electrically controlled sliding apparatus (100) for photographic equipment, **characterized in that,** the apparatus comprises:
a base (20) equipped with at least one guide rod (22);
a sliding seat (30) slidably sleeved on an outer peripheral side of the guide rod (22); and
a wear-resistant member (36) fixedly mounted on the sliding seat (30); the wear-resistant member (36) being slidably sleeved on an outer peripheral side of the guide rod (22), and the wear-resistant member (36) be arranged between the guide rod (22) and the sliding seat (30).

2. The electrically controlled sliding apparatus (100) according to claim 1, wherein two guide rods (22) are mounted parallel to the base (20); the sliding seat (30) is simultaneously limited by the two guide rods (22), and a center of the sliding seat (30) is located between the two guide rods (22).

3. The electrically controlled sliding apparatus (100) according to claim 1 or 2, wherein the sliding seat (30) is provide a through hole (37); the guide rod (22) is inserted into the through hole (37).

4. The electrically controlled sliding apparatus (100) according to claim 3, wherein the wear-resistant member (36) is mounted in the through hole (37); an inner diameter of the wear-resistant member (36) is larger than an outer diameter of the guide rod (22).

5. The electrically controlled sliding apparatus (100) according to any one of claims 1 to 4, wherein the wear-resistant member (36) is fixedly connected to the sliding seat (30) through flanges and screws.

6. The electrically controlled sliding apparatus (100) according to any one of claims 1 to 5, wherein the wear-resistant member (36) is a bushing; a cross-section of the wear-resistant member (36) is in a shape of a circular ring that is closed in the circumferential direction, and a cross-section of the guide rod (22) is circular.

7. The electrically controlled sliding apparatus (100) according to any one of claims 1 to 6, wherein corresponding to each guide rod (22), two wear-resistant members (36) are arranged in sequence along an axial direction on the sliding seat (30), and the guide rod (22) slides through the two wear-resistant members (36) in sequence.

8. The electrically controlled sliding apparatus (100) according to any one of claims 1 to 7, wherein a hardness of the wear-resistant member (36) is lower than that of the guide rod (22).

9. The electrically controlled sliding apparatus (100) according to any one of claims 1 to 8, further comprising a shaft table (40) used to connect to an electronic control installation platform (900); the sliding seat (30) being slidably mounted on the base (20) and being provide with conductive terminals (41) for forming conductive contact with the electronic control installation platform (900).

10. The electrically controlled sliding apparatus (100) according to claim 9, further comprising a conductive slip ring (50) comprising a rotating part (52) and a fixed part (51) which are rotatably connected, the rotating part (52) being in sliding contact with and electrically connected to the fixed part (51); an electrical module (31) being fixedly mounted inside the sliding seat (30); the fixed part (51) being fixedly connected to the sliding seat (30) and being electrically connected to the electrical module (31); the rotating part (52) being fixedly connected to the shaft table (40) and being electrically connected to the conductive terminals (41); the shaft table (40) comprising a cover (42) which rotates relative to the sliding seat (30), and an insulating member (46) mounted on the cover (42); several conductive terminals (41) being inserted at intervals into the insulating member (46).

11. The electrically controlled sliding apparatus (100) according to claim 10, wherein the insulating member (46) is at least partially exposed on the cover (42); an outer end face of the conductive terminals (41) is flush with an outer surface of the insulating member (46); the insulating member (46) is provided with at least one convex strip section (461); the convex strip section (461) protrudes from the outer surface of the insulating member (46), and is located between outer end faces of adjacent two conductive terminals (41).

12. The electrically controlled sliding apparatus (100) according to claim 10 or 11, wherein the cover (42) is provided with two opposing limit blocks (422); a directional groove (423) is formed between the two limit blocks (422).

13. The electrically controlled sliding apparatus (100) according to claim 12, wherein the cover (42) is provided with a first end (424) and a second end (425) which are opposite to each other; the first end (424) is used for the electronic control installation platform (900) to enter the directional groove (423); an outer surface of the insulating member (46) comprises a matching surface (462) and a transition slope (463) arranged adjacent to each other; the matching surface (462) protrudes relative to a bottom surface of the directional groove (423); the conductive terminals (41) are distributed on the matching surface (462); the transition slope (463) is located near the first end (424) of the cover (42) relative to the matching surface (462); along a direction from the second end (425) to the first end (424), the transition slope (463) is inclined towards a bottom of the directional groove (423).

14. The electrically controlled sliding apparatus (100) according to claim 9, further comprising a conductive slip ring (50) comprising a rotating part (52) and a fixed part (51) which are rotatably connected, the rotating part (52) being in sliding contact with and electrically connected to the fixed part (51); an electrical module (31) being fixedly mounted inside the sliding seat (30); the fixed part (51) being fixedly connected to the sliding seat (30) and being electrically connected to the electrical module (31); the rotating part (52) being fixedly connected to the shaft table (40) and being electrically connected to the conductive terminals (41); the shaft table (40) comprising a main shaft body (43) and a cover (42); the main shaft body (43) comprising a shaft cylinder section (431) rotatably accommodated inside the sliding seat (30) and a collar section (432) connected to the shaft cylinder section (431); the cover (42) being connected to the collar section (432); the conductive terminals (41) being mounted on the cover (42).

15. A photographic equipment comprising:
a photographic apparatus; and
an electrically controlled sliding apparatus (100) according to any one of claims 1 to 14;
wherein the photographic apparatus is connected to the electrically controlled sliding apparatus (100) directly or indirectly.
